# EUROPEAN PATENT APPLICATION

(11) **EP 4 611 251 A1**
(43) Date of publication of application: **03.09.2025**
(21) Application number: 25160895.6
(22) Date of filing: 28.02.2025
(51) Int. Cl.: H02P 27/08

(54) **ELECTRIC MOTOR AND CONTROLLER**

(30) Priority: 29.02.2024 GB 202402948
(71) Applicant: Transense Technologies PLC, Weston-on-the-Green Bicester, Oxfordshire OX25 3SX (GB)
(72) Inventor: MAUGHAN, Ryan, Stocksfield, NE43 7PG (GB); BULLOCK, Andrew, Pitstone, LU7 9AG (GB)
(74) Representative: Elsworth, Dominic Stephen

(57) **Abstract**

Apparatus comprises an electric motor, an electric motor inverter drive and an electric motor controller. The electric motor comprises a rotor having an output shaft and a stator comprising plurality of windings. The inverter drive comprises a gate high side driver and a gate low side driver for each respective winding, and the controller comprises a microcontroller and a plurality of pulse width modulators (PWMs), one PWM for each gate high side driver and each gate low side driver, the microcontroller being programmed to generate pulse width modulated signals for the gate drivers, the pulse width modulated signals being representative of requested torque. The microcontroller is connectable to a communication network and the electric motor includes a torque sensor. The torque sensor is a surface acoustic wave (SAW) sensor system, one part of the SAW sensor system being mounted on the rotor and the other part on the stator. An electrical output signal of the SAW sensor system forms an input to the microcontroller. The output of the SAW sensor system is compared by the microcontroller with the requested torque and the pulse width modulated signals for the gate drivers are modified by the microcontroller according to the difference between the programmed PWM signals representative of requested torque and the actual torque, represented by the electrical output signal of the SAW sensor system.

## Description

### Field of the Invention

The present invention relates to electric motors and in particular to controllers for the drive motors in electric vehicles.

### Background of the Invention

Electric vehicles typically use field oriented control (FOC), to control the electric motor or motors used to propel the vehicle. FOC is preferred to other forms of electric motor control because FOC provides the smoothest and most accurate motor control. However, FOC requires large amounts of processing power due to its complexity. FOC works by mathematically transforming the motor's electrical equations into a rotating reference frame with a d and a q axis 90 degrees out of phase. The motor's torque is controlled by the d-axis current while the motor's speed is controlled by the q-axis current. The controller calculates the d-axis and q-axis currents using the motor's speed, torque and other parameters. Control of the electric motor is achieved by switching circuits in the motor inverter. Not only is the processing requirement of FOC high, but the speed and position information about the rotor must be very accurate. It is therefore necessary to use a particular type of sensor known as a resolver.

Whilst FOC provides the smoothest and most accurate control, maximum switching speeds are limited. Switching speeds are limited by the time lag between obtaining data from the resolver and reading that data into the controller.

Another known method of controlling an electric motor is known as direct torque control (DTC). Whilst DTC is a much simpler control arrangement than FOC, DTC is not generally used in traction control applications because estimation errors used in DTC cause torque ripple. This torque ripple results in an unsatisfactory level of vehicle control. Acceleration of the vehicle will not be smooth as the motor output torque is not smooth. Crucially, this can lead to unintended vehicle acceleration, driveline vibration and noise. Torque ripple has been considered an inherent limitation of direct torque control. DTC is typically only used in applications where very accurate control of motor torque and speed is not required.

As electric vehicles develop there is an increasing demand for electric motors capable of running at higher speeds, as increasing motor speed increases power density. There is also a demand for the cost of electric motors and their control systems to fall.

The limiting factor for electric motors using FOC is the time taken for processing the calculations and resolver sensor inputs necessary for FOC.

It would be desirable to provide a controller for an electric motor suitable for use in an electric vehicle in which these calculations and signal processing can occur more rapidly.

It has been discovered that by providing an electric motor with a torque sensor configured to sense the torque output of the electric motor, improved control of the electric motor can be obtained.

A surface acoustic wave sensor (SAW) is a known type of sensor that is capable of sensing torque. The Applicant's United Kingdom patent number GB2397379 describes a SAW sensor.

### Summary of the Invention

According to a first aspect of the invention there is provided apparatus comprising an electric motor, an electric motor inverter drive and an electric motor controller, wherein:
the electric motor comprises a rotor having an output shaft and a stator comprising plurality of windings;
the inverter drive comprises a gate high side driver and a gate low side driver for each respective winding;
the controller comprises a microcontroller and a plurality of pulse width modulators (PWMs), one PWM for each gate high side driver and each gate low side driver, the microcontroller being programmed to generate pulse width modulated signals for the gate drivers, the programmed pulse width modulated signals being representative of requested torque;
the microcontroller is connectable to a communication network;
characterised in that the electric motor includes a torque sensor, the torque sensor being a surface acoustic wave (SAW) sensor system, one part of the SAW sensor system being mounted on the rotor and another part on the stator, an electrical output signal of the SAW sensor system that is representative of actual electric motor torque forming an input to the microcontroller and wherein the electrical output signal of the SAW sensor system is compared by the microcontroller with the requested torque and the pulse width modulated signals for the gate drivers are modified by the microcontroller according to the difference between the programmed PWM signals representative of requested torque and the actual electric motor torque, represented by the electrical output signal of the SAW sensor system.

By sensing actual motor torque and using this to modify the PWM signals to the gate drivers the torque estimation calculations of the prior art control systems are no longer required. Measuring actual torque removes the need for look-up table based calculations used to generate torque estimations.

The torque sensor may be arranged to sense torque in the output shaft. The part of the SAW sensor system mounted on the rotor may be mounted on the output shaft.

The electric motor may be a three phase motor and the plurality of windings comprise three phase windings.

The apparatus may further comprises a sensor generating a signal indicative of motor speed and/or a motor temperature sensor and wherein the outputs of the respective motor speed sensor and/or motor temperature sensor are connected, and form inputs, to the microcontroller and wherein the microcontroller is programmed to generate pulse width modulated switching signals for the gate drivers based on sensed speed and/or sensed temperature.

The temperature sensor may be configured to sense temperature in the stator.

The temperature sensor may be configured to sense temperature in the stator winding.

The apparatus may further comprise a phase current sensor having an output, wherein the phase current sensor output is connected, and forms an input, to the microcontroller.

The microcontroller may be configured to generate a field weakening current signal based on the phase current sensor output.

The communication network may be a CANbus.

The part of the SAW sensor system mounted on the rotor may be a rotor coupler and the other part mounted on the stator may be a stator coupler, each coupler including a near field antenna.

The apparatus may further comprise at least one sensor connected electrically to the near field antenna of the rotor coupler.

The rotor may include at least one flat surface, the at least one sensor mounted on the at least one flat surface.

The rotor may include two flat surfaces separated by 180 degrees, wherein each of the flat surfaces has one of the at least on sensors is mounted thereon.

The near field antenna of the stator coupler may be connected electrically to an interrogation unit.

The interrogation unit may include an application specific integrated circuit (ASIC).

The interrogation unit, for example the ASIC thereof, may generate a radio frequency interrogation signal having a frequency range. The frequency range may be 420-440MHz.

One of the sensors may be configured to pick up the radio frequency signal in a first part of the frequency range and the other of the sensors may be configured to pick up the radio frequency signal in a second part of the frequency range. The first part of the frequency range may be 420 to 430MHz and the second part of the frequency range may be 430-440MHz.

A back scattered signal from the at least one sensor may be reflected back to the interrogation unit, for example the ASIC thereof, by the near field antennas and may be read by the interrogation unit, for example by the ASIC.

An output signal from interrogation unit, typically the ASIC, may form an input to the microcontroller, thus enabling control of the motor according to the torque sensed in the motor, typically in the output shaft of the motor.

According to a second aspect of the invention there is provided an electric vehicle comprising at least one apparatus of the first aspect of the invention.

### Brief Description of the Drawings

In the Drawings, which illustrate a prior art example of a motor and associated control arrangement and the motor and associated control arrangement of the invention, which is by way of example:
Figure 1 is a schematic representation of an example of an FOC motor control arrangement of the prior art;
Figure 2 is a schematic representation of an example of a motor control arrangement of the invention;
Figure 3 is a schematic representation of a motor of the invention;
Figure 4a is a schematic representation of the assembled motor illustrated Figure 3;
Figure 4b is an exploded view of the motor illustrated in Figure 3; and
Figure 5 is an exploded view of the SAW sensor assembly of the motor illustrated in Figures 3 to 4b.

### Detailed Description of the Motor Control Arrangements Illustrated in the Drawings

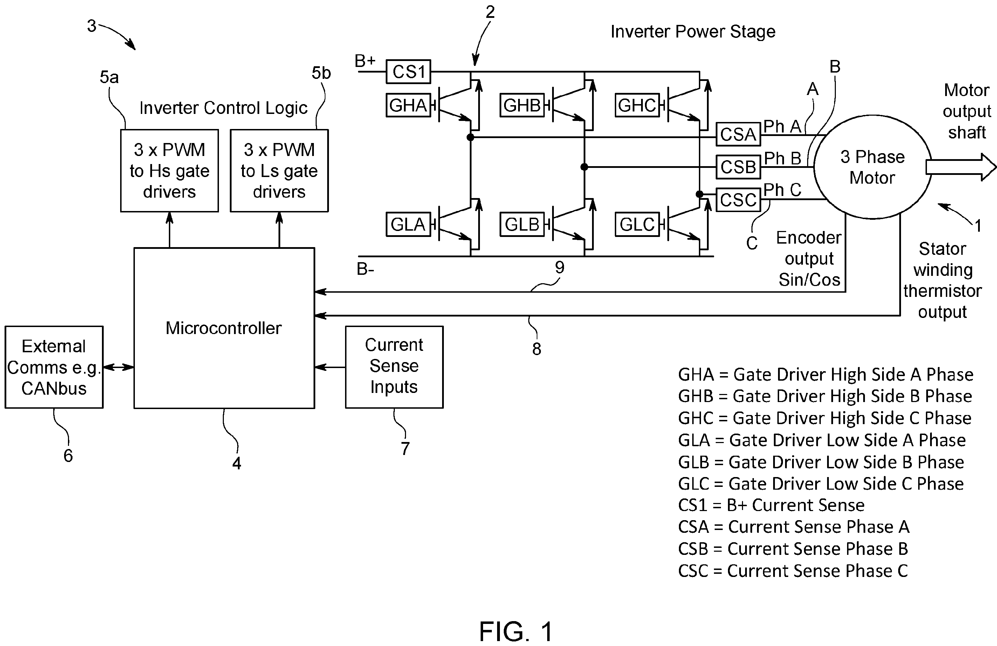

Referring first to Figure 1, a three phase electric motor 1 comprises three sets of phase windings, phase A, phase B and phase C.

The motor 1 is driven by an inverter 2, which comprises respective high side gate drivers GHA, GHB and GHC and low side gate drivers GLA, GLB and GLC.

An input voltage (B+ B-) is applied across the inverter and the input current is sensed by current sensor CS1.

Each set of windings is provided with a current sensor, current sensor A (CSA), current sensor B (CSB) and current sensor C (CSC), the respective current sensors sensing the current in the winding A-C to which the current sensor CSA to CSC is assigned.

An inverter controller 3 comprises a microcontroller 4 and two sets of three pulse width modulators 5a, 5b. Each pulse width modulator of the set of three pulse width modulators 5a is connected to a respective one of the gate high side drivers GHA, GHB and GHC. Similarly, each pulse width modulator of the set of three pulse width modulators 5b is connected to a respective one of the gate low side drivers GLA, GLB and GLC.

The microcontroller 4 is also connected to an external communications network, such as a CANbus of a vehicle of which the motor 1 forms a part. The current sensors CS1, CSA, CSB and CSC are also connected to the microcontroller 4, providing inputs thereto.

The electric motor 1 is provided with a temperature sensor in the form of a thermistor that is arranged to sense the temperature of one or more of the phase windings A to C. The output of the thermistor is connected to the microcontroller 4 as an input thereto.

The electric motor 1 is also provided with a sinusoidal encoder which provides sine and cosine signals as the rotor (not shown) of the motor 1 rotates. The sine and cosine signals give an indication of rotor position at any moment. The sine and cosine signals are provided as inputs 9 to the microcontroller 4 and are used to calculate motor speed and estimate the position of the rotor.

In use, the speed/torque demand is transmitted to the microcontroller 4 by the CANbus 6 when a driver of a vehicle of which the motor 1 forms a part, gives a command, for example by pressing on an accelerator pedal.

The sine and cosine signals from the encoder are provided to the microcontroller 4. The microcontroller 4 calculates motor speed and estimates the position of the rotor.

The currents sensed by CS1, CSA, CSB and CSC are provided as current sense inputs 7 to the microcontroller 4. The microcontroller 4 is programmed with an algorithm, such as a Clarkes transform or a Park transform through which a torque estimation is derived from the inputs to the microcontroller 4.

The microcontroller 4 calculates the pulse width modulated switching for the gate drivers GHA, GHB, GHC and GLA, GLB and GLC that provide for the correct regulation of current flowing to and from the motor 1 to achieve a desired output shaft speed and torque.

Where additional field weakening is required the microcontroller must also be able to calculate and create a suitable secondary stator current flow.

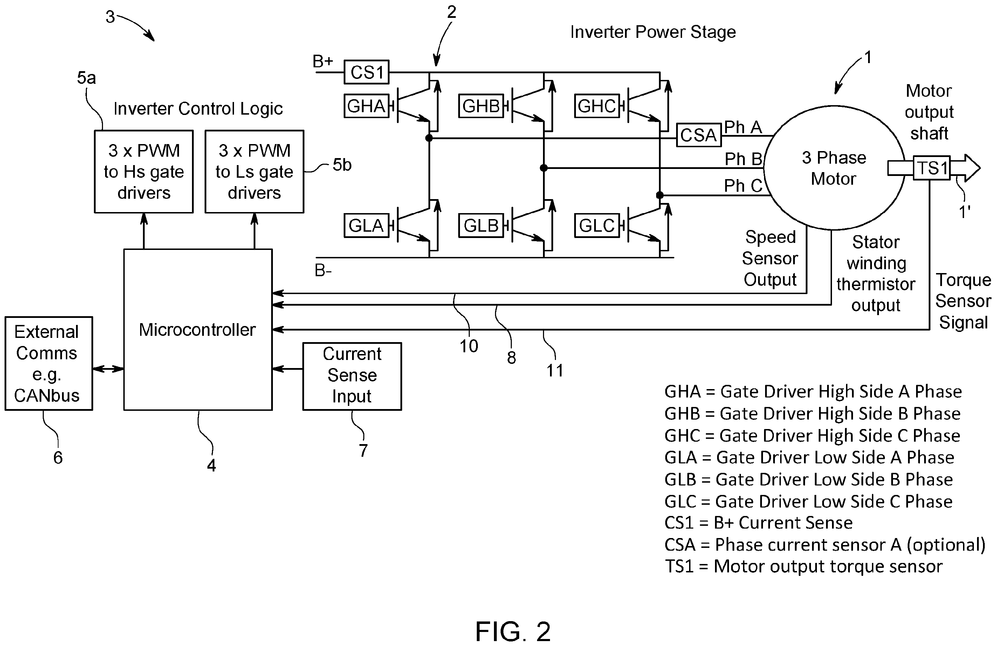

In Figures 1 and 2, like numerals are used to indicate like parts.

Figure 2 illustrates a motor and motor control arrangement of the invention having direct torque control with active torque feedback to the inverter, which comprises a three phase electric motor 1 having three sets of phase windings, phase A, phase B and phase C.

The motor 1 is driven by an inverter 2, which comprises respective high side gate drivers (GHA, GHB and GHC) and low side gate drivers GLA, GLB and GLC.

An input voltage (B+ B-) is applied across the inverter and the input current is sensed by current sensor CS1.

Whilst the phase A set of windings is shown as being provided with a current sensor A (CSA), the current sensor CSA is optional.

An inverter controller 3 comprises a microcontroller 4 and two sets of three pulse width modulators 5a, 5b. Each pulse width modulator of the set of three pulse width modulators 5a is connected to a respective one of the gate high side drivers GHA, GHB and GHC. Similarly, each pulse width modulator of the set of three pulse width modulators 5b is connected to a respective one of the gate low side drivers GLA, GLB and GLC.

The microcontroller 4 is also connected to an external communications network, such as a CANbus of a vehicle of which the motor 1 forms a part. The current sensors CS1 and if present CSA are also connected to the microcontroller 4, providing inputs thereto.

The electric motor 1 is provided with at least one temperature sensor, in the form of a thermistor or plurality of thermistors, arranged to sense the temperature of one or more of the phase windings A to C. The output 8 of the thermistor is connected to the microcontroller 4 as an input thereto.

The electric motor 1 is also provided with a speed sensor which measures the rotational speed of the motor 1 and provides a motor speed input signal 10 to the microcontroller 4.

The electric motor 1 is also provided with a torque sensor TS1 arranged to measure torque in the output shaft 1' of the motor 1. The torque sensor is a surface acoustic wave (SAW) sensor system, for example of the type described in GB2397379.

In use, the speed/torque demand is transmitted to the microcontroller 4 by the CANbus 6 when a driver of a vehicle of which the motor 1 forms a part, gives a command, for example by pressing on an accelerator pedal. The microcontroller is programmed to generate pulse width modulated signals for the gate drivers of the inverter 2, initially according to commands, such as accelerator pedal position.

The signal 10 from the motor speed sensor is compared with the speed demand transmitted to the gate drivers of the inverter 2.

Similarly, the signal 11 from the output shaft torque sensor TS1 is compared with the torque demand transmitted to the gate drivers o the inverter 2.

The microcontroller 4 calculates the differences between speed demand and measured motor speed, and torque demand and the torque measured in the output shaft 1' and uses these calculated differences to calculate the required pulse width modulation for the gate drivers so that the current flowing to the and from the phase windings of the motor cause the motor to operates at the desired speed with the desired output shaft torque.

Where additional field weakening is required the microcontroller can also calculate and create a suitable secondary stator current flow. The phase current sensor A provides the signal that allows the field weakening current to be calculated.

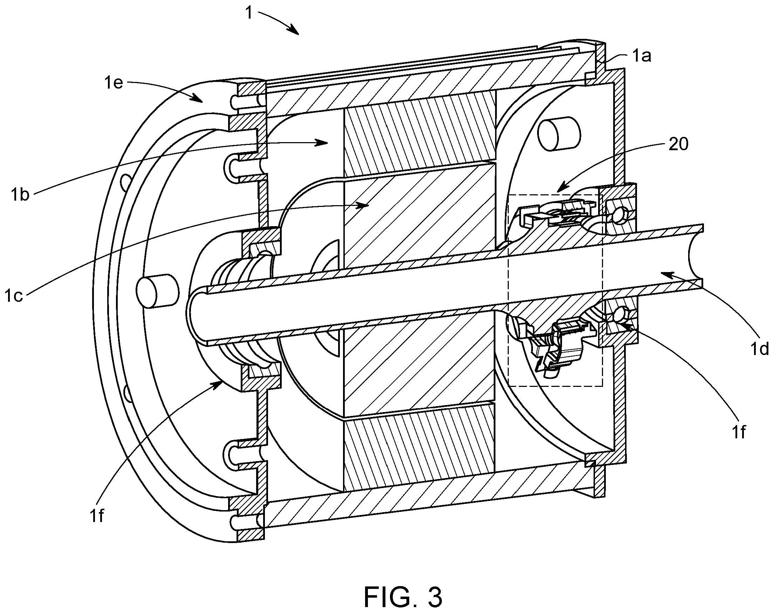

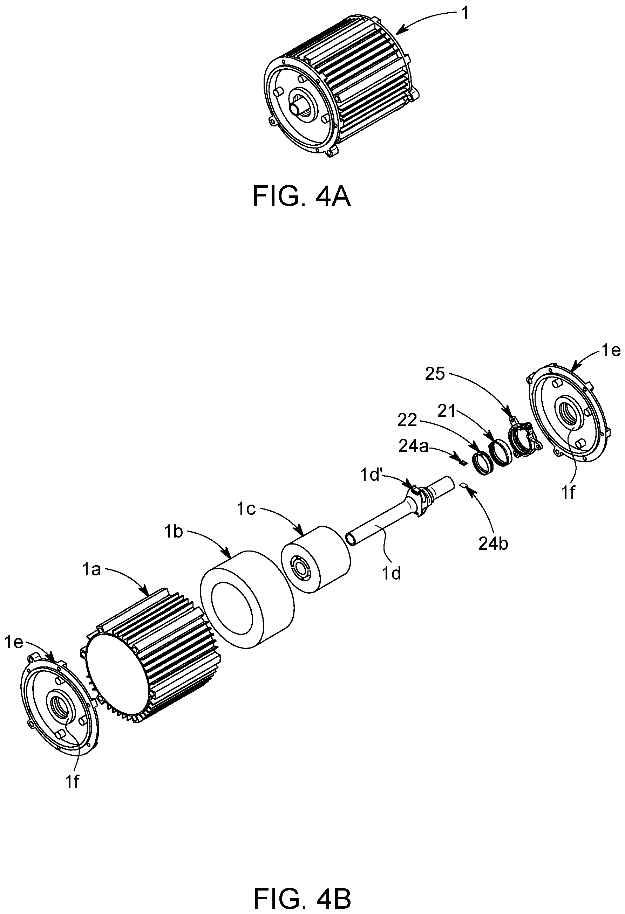

Referring now to Figures 3 and 4a, the motor 1 comprises a motor frame 1a, a stator 1b, a rotor 1c, an output shaft 1d, an end plate 1e, and support bearings 1f supporting each end of the output shaft 1d. A surface acoustic wave (SAW) sensor assembly 20 is mounted on the output shaft 1d.

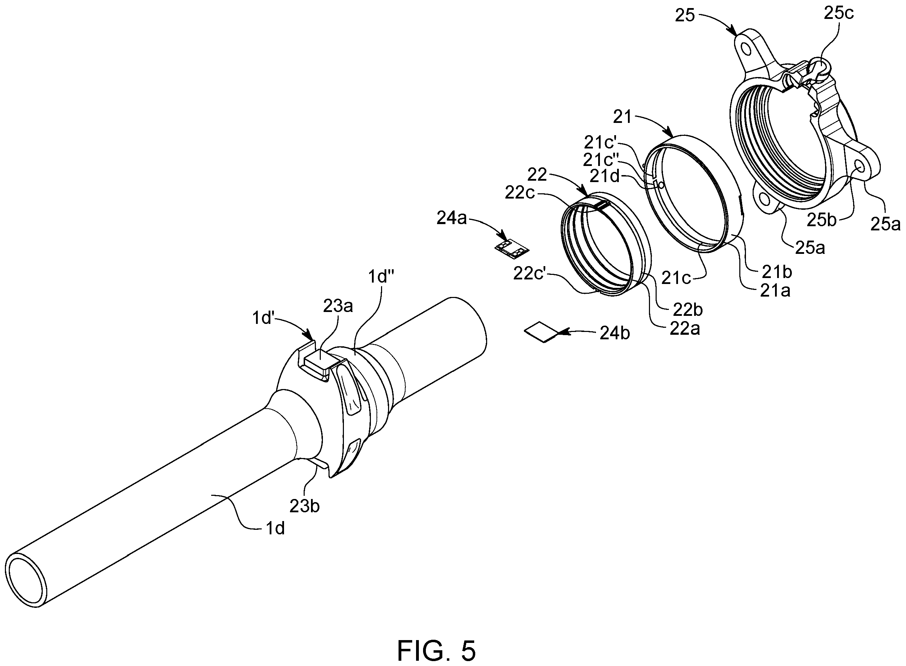

Figures 4a and 5 illustrate the SAW sensor assembly 20 in greater detail. The SAW sensor assembly 20 comprises a (PCB) stator coupler 21 which includes a collar 21a, typically formed from glass reinforced plastic. The collar 21a mounts an outer electrically conductive layer forming a ground plane antenna 21b and an inner electrically conductive track forming a near field antenna 21c. Typically, the electrically conductive components are formed from copper, although any suitable electrical conductor may be used. The SAW sensor assembly 20 further comprises a printed circuit board (PCB) rotor coupler 22, which includes a collar 22a, typically formed from glass reinforced plastic. The collar 22a mounts an outer electrically conductive layer track forming a near field antenna 22b.

The stator and rotor couplers are separated by a small distance, typically, between 1 and 20mm.

The rotor coupler 22 is fixed, for example by an adhesive, to a rotor coupler mounting region 1d" of the output shaft 1d, the rotor coupler mounting region 1d" being cylindrical in the illustrated example. The output shaft 1d is also provided with a sensor mounting region 1d', the sensor mounting region 1d' including flat surfaces 23a, 23b opposite each other on the shaft 1d. A high frequency sensor 24a is mounted on the flat surface 23a, with a low frequency sensor 24b being mounted on the flat surface 23b. By mounting two sensors opposite each other, bending of the shaft can be compensated for. In the illustrated embodiment the sensors 24a, 24b are all quartz packaged sensors. They require no power other than that in the radio frequency signal they receive and transmit. Such sensors are known in the prior art and therefore are not described in detail.

The sensors 24a, 24b are connected electrically to the near field antenna 22b of the rotor coupler 22. The electrically conductive track forming the near field antenna 22b is comprised of two parts with a small gap between those two parts. Each of the sensors 24a, 24b is connected to both parts of the electrically conductive track by pairs of wires 22c and 22c' respectively.

The near field antenna 21c of the stator coupler 21 is configured for electrical connection to an interrogation unit which includes an application specific integrated circuit (ASIC). As can be seen from Figure 5, the collar 21a of the stator coupler includes a hole 21d. The end terminals of a pair of wires through the hole 21d and attach to respective parts of the near field antenna 21c, one terminal being connected to respective ends 21c', 21c" of the near field antenna 21c. The stator couple 21 is mounted in a stator coupler housing 25 which includes attachment members 25a, each including a hole 25b that receives a screw for attaching the stator coupler housing 25 to the motor end plate 1e. The stator coupler housing 25 also provides an opening 25c through which the wire attaching the near field antenna 21c to the interrogation unit may be passed.

In use, the ASIC generates a radio frequency interrogation signal having frequency of 420 to 440 MHz in this example. This signal is transmitted to the stator near field antenna 21c and from the stator near field antenna 21c to the rotor near field antenna 22b. This radio frequency signal is transmitted from the rotor near field antenna 22b to the sensors 24a, 24b by the electrical connections 22c, the sensor 24a picking up the signal in the range 430 to 440 MHz and the sensor 24b picking up the signal in the range 420 to 430 MHz. The sensors 24a, 24b generate a back scattered signal which changes according to the torque on the shaft 1d for example. The back scattered signal from sensors 24a, 24b is reflected back to the interrogation unit by the near field antennas 22b, 21c and is read by the interrogation unit's ASIC. An output signal from the ASIC forms an input to the microcontroller 4 illustrated in Figure 2, thus enabling control of the motor 1 according to the torque sensed in the output shaft 1d.

By providing SAW sensors to sense motor speed and output shaft torque the encoder generating a sine/cosine output is not required and there is no need to perform Clarke or Park transforms to estimate torque as required by FOC electric motor control.

In the case of DTC electric motor control, the torque estimation that limits the applications where DTC electric motors can be used is replaced by measured torque, allowing more accurate control of the motor with no torque ripple.

## Claims

1. Apparatus comprising an electric motor, an electric motor inverter drive and an electric motor controller, wherein:
the electric motor comprises a rotor having an output shaft and a stator comprising plurality of windings;
the inverter drive comprises a gate high side driver and a gate low side driver for each respective winding;
the controller comprises a microcontroller and a plurality of pulse width modulators (PWMs), one PWM for each gate high side driver and each gate low side driver, the microcontroller being programmed to generate pulse width modulated signals for the gate drivers, the programmed pulse width modulated signals being representative of requested torque;
the microcontroller is connectable to a communication network;
**characterised in that** the electric motor includes a torque sensor, the torque sensor being a surface acoustic wave (SAW) sensor system, one part of the SAW sensor system being mounted on the rotor and another part on the stator, an electrical output signal of the SAW sensor system that is representative of actual electric motor torque forming an input to the microcontroller, and wherein the electrical output signal of the SAW sensor system is compared by the microcontroller with the requested torque and the pulse width modulated signals for the gate drivers are modified by the microcontroller according to the difference between the programmed PWM signals representative of requested torque and the actual electric motor torque, represented by the electrical output signal of the SAW sensor system.

2. Apparatus according to Claim 1, wherein the torque sensor is arranged to sense torque in the output shaft.

3. Apparatus according to any preceding claim, wherein the electric motor is a three phase motor and the plurality of windings comprise three phase windings.

4. Apparatus according to any preceding claim, further including a sensor generating a signal indicative of motor speed and/or a motor temperature sensor and wherein the outputs of the respective motor speed sensor and/or motor temperature sensor are connected, and form inputs, to the microcontroller and wherein the microcontroller is programmed to generate pulse width modulated switching signals for the gate drivers based on sensed speed and/or sensed temperature.

5. Apparatus according to Claim 4, wherein the temperature sensor is configured to sense temperature in the stator or the stator winding.

6. Apparatus according to any preceding claim, further comprising:
a phase current sensor having an output, wherein the phase current sensor output is connected, and forms an input, to the microcontroller; or
a phase current sensor having an output, wherein the phase current sensor output is connected, and forms an input, to the microcontroller, and wherein the microcontroller is configured to generate a field weakening current signal based on the phase current sensor output.

7. Apparatus according to any preceding claim, wherein the communication network is a CANbus.

8. Apparatus according to any preceding claim, wherein the SAW sensor system mounted on the rotor is a rotor coupler and the other part on the stator is a stator coupler, each coupler including a near field antenna.

9. Apparatus according to Claim 8, further comprising:
at least one sensor connected electrically to the near field antenna of the rotor coupler; or
at least one sensor connected electrically to the near field antenna of the rotor coupler and wherein the rotor includes at least one flat surface, the at least one sensor mounted on the at least one flat surface; or
at least one sensor connected electrically to the near field antenna of the rotor coupler and wherein the rotor includes at least one flat surface, the at least one sensor mounted on the at least one flat surface and wherein the rotor includes two flat surfaces separated by 180 degrees, wherein each of the flat surfaces has one of the at least on sensors is mounted thereon.

10. Apparatus according to Claim 8 or 9, wherein the near field antenna of the stator coupler is connected electrically to an interrogation unit.

11. Apparatus according to Claim 10, wherein the interrogation unit includes an application specific integrated circuit (ASIC).

12. Apparatus according to Claim 11, wherein the ASIC generates a radio frequency interrogation signal having a frequency range.

13. Apparatus according to Claim 11 when dependent on Claim 9, wherein one of the sensors is configured to pick up the radio frequency signal in a first part of the frequency range and the other of the sensors is configured to pick up the radio frequency signal in a second part of the frequency range.

14. Apparatus according to any of Claims 10 to 13, wherein:
a back scattered signal from the at least one sensor is reflected back to the interrogation unit by the near field antennas and is read by the interrogation unit;
a back scattered signal from the at least one sensor is reflected back to the interrogation unit by the near field antennas and is read by the interrogation unit and wherein an output signal from interrogation unit is the output of the SAW sensor system and the input to the microcontroller.

15. An electric vehicle comprising at least one apparatus as claimed in any of Claims 1 to 14.
